# EUROPEAN PATENT APPLICATION

(11) **EP 1 433 834 A1**
(43) Date of publication of application: **30.06.2004**
(21) Application number: 02800736.7
(22) Date of filing: 02.10.2002
(51) Int. Cl.: C10J 3/00, C01B 3/02, C10B 53/00

(54) **METHOD OF RECOVERING HYDROGEN FROM RESIN WASTE, PROCESS FOR PRODUCING HYDROGEN FROM RESIN WASTE, AND APPARATUS FOR PRODUCING HYDROGEN FROM RESIN WASTE**

(30) Priority: 03.10.2001 JP 2001307835; 15.10.2001 JP 2001316224; 15.10.2001 JP 2001316225
(71) Applicant: Sony Corporation, Tokyo 141-0001 (JP)
(72) Inventor: WATANABE, Haruo; c/o SONY CORPORATION, Shinagawa-ku, Tokyo 141-0001 (JP); HABU, Kazutaka; c/o SONY CORPORATION, Shinagawa-ku, Tokyo 141-0001 (JP)
(74) Representative: Thévenet, Jean-Bruno
(86) International application number: PCT/JP2002/010267
(87) International publication number: WO 2003/031538

(57) **Abstract**

A method for efficiently recovering hydrogen from resin waste. The method , characterized by reacting waste containing resin with water in the presence of hydrous iron oxide particles or/and iron oxide particles.

## Description

### BACKGROUND ART

Use or consumption of materials causes waste. Previously, metals, such as iron and copper, rags, and wastepaper were collected and reused. However, recently, in accordance with improvement of the living standard, a great amount of synthetic resins (hereinafter, referred to simply as "resin(s)"), chemical agents, fiber, and metal (e.g., iron and aluminum) pieces are produced, and then consumed and disposed of. From the viewpoint of achieving effective utilization of resources, in recent years, it is recommended to reuse the waste or waste materials, and "Law for Promotion of Effective Utilization of Resources" was promulgated and put into force in 1991. Some local public entities have launched various strategies of promoting the recycling of waste.

Resin waste materials are recycled in material recycling, chemical recycling, or thermal recycling. The material recycling reuses or reclaims resin waste as resins. The chemical recycling employs chemical decomposition. The thermal recycling offers electricity generation by incineration. From the viewpoint of lowering the load on the environment caused by the recycling of resources, it is preferable that they be in the order material recycling, chemical recycling and thermal recycling. However, in practicing the material recycling, resin materials inevitably deteriorate with time, and hence, their physical properties cannot be permanently kept. In addition, involving in production, use, and recycling of products, the physical properties of resin materials inevitably deteriorate due to contamination, inclusion of impurities, heat, light, or oxygen. On the other hand, the way of using resin materials is improved in level and function, and the resin materials are blended or alloyed each other, or being composed with a plurality of materials. For this reason, for example, material recycling is preferably conducted in a place at which basic materials are produced or processed. When the materials are transferred to a place for higher processing and then to a distribution channel and are used by purchasers, namely, when the materials are far from the place where they are produced, the load on the environment increases due to collection of the materials, and further, the value of the materials as resources is lowered. As mentioned above, ultimately, since the material recycling has limitations, materials are reclaimed inevitably depending on chemical recycling or thermal recycling (pages 220 to 223 of "Plastic Recycling Technique" published on July 10, 2000 by CMC Publishing Co., Ltd.; and Unexamined Japanese Patent Application Laid-Open Specification Nos. 2-273557, 3-106632, 3-179088, 3-207618, and 3-247634).

When resin waste materials are reclaimed as usable materials by the above mentioned recycling ways, a great amount of resources and energy are often invested, and hence, new resin products produced from resources, mainly petrol, sometimes cause a smaller load on the environment rather than that caused by the recycled materials. As a method for improving the resource efficiency of the recycling or reuse of materials, recovering of hydrogen from resin waste materials is proposed (WO96/31736). However, this method is currently made utilizing merely a thermal reaction, and therefore needs a high reaction temperature, thus lowering the energy efficiency. For solving the problem, the use of a catalyst is considered, but waste materials contain various elements and therefore easily deactivate the catalyst. Further, although elements of the platinum group are effective for obtaining a high activity, they are not practical from an economical point of view. In addition, the use of a catalyst comprised of a heavy metal or the like, which is a substance causing environmental pollution, results in new further load on the environment. For solving these problems, the use of an inexpensive, safe, and disposable catalyst is effective.

In the present invention, in view of the above, studies have been made, and, as a result, it has been found that the task can be achieved by using hydrous iron oxide particles, iron oxide particles, or a mixture of the particles as a catalyst or a precursor of a catalyst.

In addition, in the present invention, the activity of the catalyst or precursor of the catalyst or the efficiency of the reaction is improved by further using a dispersant.

### DISCLOSURE OF THE INVENTION

The method for producing or recovering hydrogen from a resin waste material in the first invention of the present invention is a method in which waste containing resin is made to react with water in the presence of hydrous iron oxide particles, iron oxide particles, or a mixture of the particles to increase the hydrogen content of a gas generated. Further, in the method for producing or recovering hydrogen from a resin waste material, an amount of the hydrous iron oxide particles, the iron oxide particles, or the mixture of the particles added may be 0.01 to 50% by weight, based on the weight of the waste containing resin. Still further, in the method for producing or recovering hydrogen from a resin waste material, the hydrous iron oxide particles, the iron oxide particles, or the mixture of the particles may have a specific surface area of 5 m²/g or more.

Specifically, the first invention of the present invention is directed to:
(1) a method for producing hydrogen, characterized by reacting waste, which contains a resin, with water in the presence of hydrous iron oxide particles or/and iron oxide particles;
(2) the method for producing hydrogen according to item (1) above is characterized in that an amount of the hydrous iron oxide particles or/and iron oxide particles used is 0.01 to 50% by weight, based on the weight of the waste containing resin;
(3) the method for producing hydrogen according to item (1) above is characterized in that the hydrous iron oxide particles or/and iron oxide particles have a specific surface area or surface area of 5 m²/g or more;
(4) the method for producing hydrogen according to item (1) above is characterized in that a reaction temperature is 300 to 2,000°C;
(5) the method for producing hydrogen according to item (1) above is characterized in that a reaction pressure is 0.001 to 1,000 atm.;
(6) the method for producing hydrogen according to item (1) above is characterized in that the hydrous iron oxide may be one member, or two or more members selected from goethite (α-FeOOH), lepidocrocite (γ-FeOOH), and δ-FeOOH;
(7) the method for producing hydrogen according to item (1) above is characterized in that the iron oxide may be one member or a mixture of two or more members selected from hematite (α-Fe₂0₃) , magnetite (Fe₃0₄), maghemite (γ-Fe₂0₃), an iron oxide in an oxidation state between that of hematite and that of magnetite, and an iron oxide in an oxidation state between that of maghemite and that of magnetite;
(8) a method for recovering hydrogen, characterized by reacting a resin with water in the presence of hydrous iron oxide particles or/and iron oxide particles, and taking hydrogen from the reaction mixture;
(9) the method for recovering hydrogen according to item (8) above is characterized in that the resin is waste containing resin;
(10) use of hydrous iron oxide particles or/and iron oxide particles for producing or recovering hydrogen from a resin waste material; and
(11) an apparatus for producing or recovering hydrogen from resin waste material, the apparatus having hydrous iron oxide particles or/and iron oxide particles mounted thereon.
   By virtue of having the above-mentioned configuration, the present invention can recover hydrogen at a low cost in production or recovery of hydrogen from resin waste materials without lowering the energy efficiency and without increasing the load on the environment. Thus, polymer waste materials, which had been difficult to dispose of, can be reclaimed as usable materials, and can be leading to contribution to protection of the environment.
   The method for producing or recovering hydrogen from a resin waste material in the second invention of the present invention is a method in which waste containing resin is made to react with water in the presence of a dispersant and hydrous iron oxide particles, iron oxide particles, or a mixture of the particles to increase the hydrogen content of a gas generated. Further, in the method for producing or recovering hydrogen from a resin waste material, the surfaces of the hydrous iron oxide particles or/and the iron oxide particles may be covered with the dispersant. Still further, in the method for producing or recovering hydrogen from a resin waste material, an amount of the dispersant used may be 0.1 to 500% by weight, based on the weight of the hydrous iron oxide particles or/and iron oxide particles.
   Specifically, the second invention of the present invention is directed to:
(12) a method for producing hydrogen, characterized by reacting waste, which contains a resin, with water in the presence of a dispersant and hydrous iron oxide particles or/and iron oxide particles;
(13) the method for producing hydrogen according to item (12) above is characterized in that the surfaces of the hydrous iron oxide particles or/and iron oxide particles are covered with the dispersant;
(14) the method for producing hydrogen according to item (12) above is characterized in that an amount of the dispersant used is 0.1 to 500% by weight, based on the weight of the hydrous iron oxide particles or/and iron oxide particles;
(15) the method for producing hydrogen according to item (12) above is characterized in that an amount of the hydrous iron oxide particles or/and iron oxide particles used is 0.01 to 50% by weight, based on the weight of the waste containing resin;
(16) the method for producing hydrogen according to item (12) above is characterized in that the hydrous iron oxide particles or/and iron oxide particles have a specific surface area or surface area of 5 m²/g or more;
(17) the method for producing hydrogen according to item (12) above is characterized in that a reaction temperature is 300 to 2,000°C;
(18) the method for producing hydrogen according to item (12) above is characterized in that a reaction pressure is 0.001 to 1,000 atm.;
(19) the method for producing hydrogen according to item (12) above is characterized in that the hydrous iron oxide may be one member, or two or more members selected from goethite (α-FeOOH), lepidocrocite (γ-FeOOH), and δ-FeOOH;
(20) the method for producing hydrogen according to item (12) above is characterized in that the iron oxide may be one member or a mixture of two or more members selected from hematite (α-Fe₂0₃), magnetite (Fe₃0₄) , maghemite (γ-Fe₂0₃), an iron oxide in an oxidation state between that of hematite and that of magnetite, and an iron oxide in an oxidation state between that of maghemite and that of magnetite;
(21) a method for recovering hydrogen, characterized by reacting a resin with water in the presence of hydrous iron oxide particles or/and iron oxide particles, and taking hydrogen from the reacted mixture;
(22) the method for recovering hydrogen according to item (21) above is characterized in that the resin is waste containing resin;
(23) use of hydrous iron oxide particles or/and iron oxide particles, which have surfaces covered with a dispersant, for producing or recovering hydrogen from a resin waste material; and
(24) an apparatus for producing or recovering hydrogen from a resin waste material, the apparatus having hydrous iron oxide particles or/and iron oxide particles whose surfaces are covered with a dispersant.
   By virtue of having the above-mentioned configuration, the present invention can recover hydrogen at a low cost in production or recovery of hydrogen from resin waste materials without lowering the energy efficiency and without increasing the load on the environment. Thus, polymer waste materials, which had been difficult to dispose of, can be reclaimed as usable materials, and can be leading to contribution to protection of the environment.
   The method for producing or recovering hydrogen from a resin waste material in the third invention of the present invention is a method in which waste containing resin is made to react with water in the presence of hydrous iron oxide particles or/and iron oxide particles to produce hydrogen, wherein a resin composition containing the hydrous iron oxide particles or/and iron oxide particles is mixed with the waste containing resin to provoke a reaction. In the method for producing or recovering hydrogen, the resin composition containing the hydrous iron oxide particles or/and iron oxide particles and the waste containing resin may be melt-mixed with each other.
   Specifically, the third invention of the present invention is directed to:
(25) a method for producing hydrogen, including reacting waste, which contains a resin, with water in the presence of hydrous iron oxide particles or/and iron oxide particles, the method being characterized in that a resin composition containing the hydrous iron oxide particles or/and iron oxide particles is mixed with the waste containing resin to provoke a reaction;
(26) the method for producing hydrogen according to item (25) above is characterized in that the resin composition containing the hydrous iron oxide particles or/and iron oxide particles and the waste containing resin are melt-mixed with each other;
(27) the method for producing hydrogen according to item (25) above is characterized in that an amount of the hydrous iron oxide particles or/and iron oxide particles used is 0.01 to 50% by weight, based on the resin weight in the waste containing resin and the resin composition;
(28) the method for producing hydrogen according to item (25) above is characterized in that the hydrous iron oxide particles or/and iron oxide particles have a specific surface area or surface area of 5 m²/g or more;
(29) the method for producing hydrogen according to item (25) above is characterized in that a reaction temperature is 300 to 2,000°C;
(30) the method for producing hydrogen according to item (25) above is characterized in that a reaction pressure is 0.001 to 1,000 atm.;
(31) the method for producing hydrogen according to item (25) above is characterized in that the hydrous iron oxide may be one member, or two or more members selected from goethite (α-FeOOH), lepidocrocite (γ-FeOOH), and δ-FeOOH;
(32) the method for producing hydrogen according to item (25) above is characterized in that the iron oxide may be one member or a mixture of two or more members selected from hematite (α-Fe₂0₃), magnetite (Fe₃0₄) , maghemite (γ-Fe₂0₃), an iron oxide in an oxidation state between that of hematite and that of magnetite, and an iron oxide in an oxidation state between that of maghemite and that of magnetite;
(33) an apparatus for producing hydrogen by reacting waste, which contains a resin, with water in the presence of hydrous iron oxide particles or/and iron oxide particles, the apparatus being characterized in that a resin composition containing the hydrous iron oxide particles or/and iron oxide particles is mixed with the waste containing resin to provoke a reaction;
(34) the apparatus for producing hydrogen according to item (33) above is characterized in that the resin composition containing the hydrous iron oxide particles or/and iron oxide particles and the waste containing resin are melt-mixed with each other;
(35) the apparatus for producing hydrogen according to item (33) above is characterized in that an amount of the hydrous iron oxide particles or/and iron oxide particles used is 0.01 to 50% by weight, based on the resin weight in the waste containing resin and the resin composition;
(36) the apparatus for producing hydrogen according to item (33) above is characterized in that the hydrous iron oxide particles or/and iron oxide particles have a specific surface area or surface area of 5 m²/g or more;
(37) the apparatus for producing hydrogen according to item (33) above is characterized in that a reaction temperature is 300 to 2,000°C;
(38) the apparatus for producing hydrogen according to item (33) above, is characterized in that a reaction pressure is 0.001 to 1,000 atm.;
(39) the apparatus for producing hydrogen according to item (33) above is characterized in that the hydrous iron oxide may be one member, or two or more members selected from goethite (α-FeOOH), lepidocrocite (γ-FeOOH), and δ-FeOOH;
(40) the apparatus for producing hydrogen according to item (33) above is characterized in that the iron oxide may be one member or a mixture of two or more members selected from hematite (α-Fe₂0₃), magnetite (Fe₃0₄), maghemite (γ-Fe₂0₃) , an iron oxide in an oxidation state between that of hematite and that of magnetite, and an iron oxide in an oxidation state between that of maghemite and that of magnetite;
(41) a method for producing or recovering hydrogen, characterized by reacting a resin with water in the presence of a resin composition containing hydrous iron oxide particles or/and iron oxide particles, and taking hydrogen from the reaction mixture;
(42) the method for producing or recovering hydrogen according to item (41) above is characterized in that the resin is waste containing resin;
(43) use of a resin composition, which contains hydrous iron oxide particles or/and iron oxide particles, for producing or recovering hydrogen from a resin waste material; and
(44) an apparatus for producing or recovering hydrogen from a resin waste material, the apparatus having a resin composition which contains hydrous iron oxide particles or/and iron oxide particles.

By virtue of having the above-mentioned configuration, the present invention can recover hydrogen at a low cost in production or recovery of hydrogen from resin waste materials without lowering the energy efficiency and without increasing the load on the environment. Thus, polymer waste materials, which had been difficult to dispose of, can be reclaimed as usable materials, and can be leading to contribution to protection of the environment.

### BEST MODE FOR CARRYING OUT THE INVENTION

In the first invention, the second invention, and the third invention, hydrous iron oxide particles, iron oxide particles, or a mixture of the particles is used as a catalyst or a precursor of a catalyst. As the hydrous iron oxide, goethite (α-FeOOH), lepidocrocite (γ-FeOOH), or δ-FeOOH can be used. As the iron oxide, hematite (α-Fe₂O₃), magnetite (Fe₃O₄), maghemite (γ-Fe₂O₃), or an iron oxide in an oxidation state between that of hematite or maghemite and that of magnetite can be used, and a mixture of these can be used. As the particles, any shape of particle can be used such as granulated form, needle form, sheet form, and spindle form. It is preferred that a specific surface area of the hydrous iron oxide particles, or of the iron oxide particles, or of the mixture of the particles is 5 to 250 m²/g. When the specific surface area is less than the lower limit, the amount of the active sites exposed on the surface is too small, and then lowering the catalytic activity per unit weight of the catalyst. When the specific surface area exceeds the upper limit, it is unlikely that a satisfactory dispersibility of the particles as primary particles can be obtained, hence the amount of the active sites exposed on the surface is too small, and then lowering the catalytic activity per unit weight of the catalyst.

In the second invention, as the dispersant, a surfactant, for example, an anionic surfactant, a cationic surfactant, a nonionic surfactant, or an amphoteric surfactant, or a fatty acid (for example, oleic acid, linoleic acid, or linolenic acid) can be appropriately used. Examples of anionic surfactants include fatty acid salts, higher alcohol sulfate salts, liquid fatty oil sulfate salts, sulfuric acid salts of an aliphatic amine or an aliphatic amide, aliphatic alcohol phosphate salts, sulfonic salts of a dibasic fatty acid ester, sulfonic salts of a fatty acid amide, and formalin condensed naphthalenesulfonic acid salts. Examples of cationic surfactants include aliphatic amine salts, quaternary ammonium salts, and alkylpyridinium salts. Examples of nonionic surfactants include polyoxyethylene alkyl ether, polyoxyethylene alkylphenol ether, polyoxyethylene alkyl ester, sorbitan alkyl ester, and polyoxyethylene sorbitan alkyl ester. Examples of fatty acids in the fatty acid salts are as mentioned above. Further, in addition to the above various surfactants, various coupling agents, such as a silane coupling agent, a titanate coupling agent, an aluminate coupling agent, and a zirconate coupling agent, can be used.

In the second invention, the amount of the dispersant used is preferably 0.1 to 500% by weight, based on the weight of the hydrous iron oxide particles or/and iron oxide particles. Further preferably 1 to 100% by weight. More preferably 2 to 50% by weight. Further, in the present invention, it is preferred that the dispersant is attached to the surfaces of the water-containing iron oxide, particles or/and iron oxide particles. When increasing the rate of the dispersant covered, the catalyst particles are improving in dispersibility in the resin. For this reason, the interface between the catalyst and the resin is enlarged, thus improving the catalytic activity per unit weight of the catalyst.

The hydrous iron oxide particles or/and iron oxide particles whose surfaces is covered (adsorbed) with a dispersant can be easily produced by known methods, for example, a method of mixing a dispersant and the hydrous iron oxide particles or/and iron oxide particles with each other. In this case, the dispersant may be first dissolved in an appropriate solvent (for example, water, toluene, xylene, or benzene), and then mixed with the hydrous iron oxide particles or/and iron oxide particles, and, preferably, after mixing, the solvent is distilled off under a reduced pressure, thus obtaining hydrous iron oxide particles or/and iron oxide particles whose surfaces are covered with a dispersant.

The resin in the resin waste material in the first invention, in the second invention, and in the third invention and the resin in the resin composition containing the hydrous iron oxide particles or/and iron oxide particles in the third invention may be either a thermoplastic resin or a thermosetting resin, but preferred is a thermoplastic resin which is more closely in contact with the catalyst as the temperature rises. Examples of these resins include high-density polyethylene, linear low-density polyethylene, medium-density polyethylene, low-density polyethylene, ultra-high-molecular-weight polyethylene, water crosslinked polyethylene, chlorinated polyethylene, polypropylene, polybutylene, ABS resins, ACS resins, AES resins, ABS/PVC alloys, alkyd resins, amino resins, bismaleimide triazine resins, ASA resins, cellulose plastics, chlorinated polyether, diallyl phthalate resins, ethylene-α-olefin copolymers, ethylene-vinyl acetate-vinyl chloride copolymers, ethylene-vinyl chloride copolymers, EVA resins, furan resins, polyamide-imide, polyarylate, polyallylsulfone, polybutadiene, polybenzoimidazole, epoxy resins, olefin vinyl alcohol copolymers, aromatic polyester, methacryl-styrene copolymers, nitrile resins, petroleum resins, polyacetal, phenolic resins, polyamide, reinforced polyamide, modified polyamide, polybutylene terephthalate, polycarbonate, PC/ABS alloys, PC/AES alloys, polyether ether ketone, polyetherimide, polyether ketone, polyethernitrile, polyether sulfone, polythioether sulfone, polyethylene terephthalate, polyethylene naphthalate, polyimide, thermoplastic polyimide, polyaminobismaleimide, polyketone, methacrylic resins, polymethylpentene, norbornene resins, polyphenylene ether, polyethylene oxide, polyphenylene sulfide, polysulfone, unsaturated polyester resins, vinyl ester epoxy resins, polyvinyl acetate, xylene resins, polystyrene, SAN resins, styrene copolymers, butadienestyrene resins, polyvinyl acetal, polyurethane, polyvinyl alcohol, polyvinyl chloride, acryl-modified polyvinyl chloride, polyvinylidene chlride, cellulose acetate, cellophane, cellulose nitrate, acetylcellulose, phenolic resins, urea resins, melamine resins, furan resins, diallyl phthalate resins, guanamine resins, ketone resins, polybutadiene, polymethylpentene, poly-α-methylstyrene, polyparavinyl phenol, AAS resins, polyacrylonitrile, and polyvinyl butyral.

In the first invention and in the second invention, it is preferred that the catalyst and the resin waste material are placed so as to having a contact area as large as possible. For that purpose, it is preferred that the catalyst particles are a fine particle and that the catalyst particles are well dispersed into the resin waste material. For achieving this, the resin waste material may be finely divided using, for example, a cutter, a crusher, or a grinder, or the catalyst particles can be dispersed in the resin waste material when the resin waste material is in the state of having fluidity at high temperatures. Alternatively, the catalyst particles can be dispersed in the resin waste material by dissolving the resin waste material in a solvent, and the catalyst particles are dispersed in the resultant solution of the resin waste material, and then the solvent is removed. The type of the solvent used for dissolving the resin waste material may vary depending on the types of the resin, but it may be selected according to the techniques conventionally established. For example, there can be mentioned limonene, isoamyl acetate, benzyl propionate, butyric acid esters, and mixtures thereof. If desired, before starting the reaction in the present invention, a useful metal, such as iron or copper, or a noble metal, such as gold or silver, may be preliminarily recovered from the resin waste material in accordance with a known method. In this case, a magnetic separator or a particle separator may be used.

In the first invention and the second invention, it is desired that the amount of the hydrous iron oxide particles or/and iron oxide particles used is 0.01 to 50% by weight, preferably 0.1 to 40% by weight, based on the weight of the resin waste material. When the amount is less than the lower limit, a satisfactory catalytic effect cannot be achieved. On the other hand, when the amount exceeds the upper limit, the amount of the catalyst used is too large and it is disadvantageous from the viewpoint of lowering the load on the environment rather than from an economical point of view.

In the third invention, in a method for producing hydrogen, including reacting waste, which contains a resin, with water in the presence of hydrous iron oxide particles or/and iron oxide particles, a resin composition containing the hydrous iron oxide particles or/and iron oxide particles is mixed with the waste containing resin to provoke a reaction. Further, the resin composition containing the hydrous iron oxide particles or/and iron oxide particles and the waste containing resin may be melt-mixed with each other. It is preferred that the mixing of these is conducted under a high shear by so-called kneading. For achieving this mixing efficiently, it is preferred that the mixing is conducted under conditions such that the resin in the waste containing resin or the resin in the resin composition containing the hydrous iron oxide particles or/and iron oxide particles is softened or melted. For achieving this, it is desired to elevate the temperature of the above-mentioned mixing system. Therefore, it is preferred that the mixing system is provided with a heating means or heat generated by the energy loss caused by the high shear is utilized. When the so-called kneading is conducted, two rolls, three rolls, an open kneader, a continuous kneader, a pressure kneader, or an extruder can be used, and further, these machines provided with a heating means can be used.

An effective apparatus for practicing the present invention includes a kneading means or a heat-kneading means wherein the kneading means is connected to the reaction system so that the mixture is directly extruded and supplied to the reaction system.

In the present invention, in the resin composition containing the hydrous iron oxide particles or/and iron oxide particles, it is preferred that the hydrous iron oxide particles or/and iron oxide particles are well dispersed in the resin. For achieving this, the resin may be finely divided using, for example, a cutter, a crusher, or a grinder, or the catalyst particles may be dispersed in the resin when the resin is the state of having fluidity at high temperatures. Alternatively, the catalyst particles may be dispersed in the resin by dissolving the resin in a solvent, and the catalyst particles are dispersed in the resultant solution of the resin, and then the solvent is removed. The type of the solvent used for dissolving the resin may vary depending on the types of the resin, but it may be selected according to the techniques conventionally established. For example, there can be mentioned limonene, isoamyl acetate, benzyl propionate, butyric acid esters, and mixtures of these. As the resin, a resin in a resin waste material can be used. The content of the hydrous iron oxide particles or/and iron oxide particles in the resin composition containing the hydrous iron oxide particles or/and iron oxide particles is generally about 0.01 to 99% by weight, preferably about 5 to 70% by weight, more preferably about 10 to 50% by weight.

In the third invention, it is preferred that the resin composition containing the hydrous iron oxide particles or/and iron oxide particles and the resin waste material are mixed as evenly as possible. For achieving this, the resin waste material may be finely divided using, for example, a cutter, a crusher, or a grinder. If desired, before starting the reaction in the present invention, a useful metal, such as iron or copper, or a noble metal, such as gold or silver, may be preliminarily recovered from the resin waste material in accordance with a known method. In this case, a magnetic separator or a particle separator may be used.

In the present invention, it is desired that the amount of the hydrous iron oxide particles or/and iron oxide particles used is 0.01 to 50% by weight, preferably 0.1 to 40% by weight, based on the resin weight in the waste containing resin and the resin composition. When the amount is less than the lower limit, a satisfactory catalytic effect cannot be achieved. On the other hand, when the amount exceeds the upper limit, the amount of the catalyst used is too large and it is disadvantageous from the viewpoint of lowering the load on the environment rather than from an economical point of view.

In the chemical reaction in the first invention, the second invention, and the third invention, hydrogen is thermally obtained from a resin waste material. In the reaction, a reaction of carbon in the resin waste material and water forms oxidized carbon, for example, carbon monoxide or carbon dioxide, and hydrogen. The water used in this reaction may be supplied to the reaction system in the form of ice, water, or steam, or can be supplied the water in the form contained in the resin waste material. Alternatively, the water can be supplied in the form of physically absorbed water, chemically absorbed water, or water of crystallization of the catalyst particles. The above-mentioned chemical reaction is an endothermic reaction, and the temperature of the reaction system lowers as the reaction proceeds. Therefore, for proceeding the reaction, it is required to supply heat to the reaction system. Thus, by using an apparatus system for supplying heat to the reaction system from the outside, the reaction can be proceeded. Alternatively, the reaction can proceed by supplying an oxidant, such as oxygen, with water simultaneously or continuously or intermittently to the reaction system in the same manner as in the supplying of water. That is, by superinducing an oxidation reaction of he resin waste material, which is an exothermic reaction, lowering of the temperature of the reaction system can be prevented. The hydrogen generating reaction can further include a reaction in which hydrogen and dehydrogenated products are generated due to thermal decomposition reaction of the resin waste material.

In the first invention, the second invention, and the third invention, conditions for the reaction may be such that the reaction temperature is 300 to 2,000°C and the reaction pressure is 0.001 to 1,000 atm. When the parameters are less than the respective lower limits, the reaction efficiency may be low, and, when the parameters exceed the respective upper limits, the reaction conditions may be severe, thus lowering the practical performance of the apparatus.

Hydrogen formed by the first invention, the second invention, and the third invention can be separated from the reaction gas and used as a chemical raw material, for example, a raw material for ammonia synthesis. In addition, the hydrogen gas separated can be converted to electric energy in a fuel cell and then used as clean energy.

The method for taking hydrogen from the reaction gas has conventionally been established, for example, a method using activated carbon, and therefore, in the present invention, hydrogen may be taken from the reaction gas in accordance with known inventions (see, for example, Unexamined Japanese Patent Application Laid-Open Specification No. 2-281096).

### Examples

First, examples of the first invention will be described.

### (Example 1)

3.8 parts by weight of a sample, which was prepared by well dispersing 30 parts by weight of goethite particles (α-FeOOH; form: spindle-shaped; specific surface area: 81 m²/g) in 70 parts by weight of polyethylene, and 6.5 parts by weight of water placed in a glass capillary were inserted into a Pyrex glass tube, and the glass tube was evacuated to create a vacuum and sealed. The resultant glass tube was placed in a stainless steel tube, and the stainless steel tube was placed in an electric furnace at 600°C for 20 minutes, and then quickly cooled. After cooling, the gaseous matter in the sealed glass tube was analyzed. Formation of main gaseous matter containing 27 parts by volume of hydrogen, 18 parts by volume of methane, and 7 parts by volume of ethylene has been confirmed.

### (Comparative Example 1)

Substantially the same procedure as in Example 1 was conducted except that the water placed in a glass capillary was not used. Formation of main gaseous matter containing 16 parts by volume of hydrogen, 13 parts by volume of methane, and 6 parts by volume of ethylene has been confirmed.

### (Comparative Example 2)

Substantially the same procedure as in Example 1 was conducted except that the goethite particles were not used. Formation of main gaseous matter containing 2 parts by volume of hydrogen, 13 parts by volume of methane, and 14 parts by volume of ethylene has been confirmed.

Next, examples of the second invention will be described.

### (Example 2)

100 parts by weight of goethite particles (α-FeOOH; form: spindle-shaped; specific surface area: 81 m²/g) were added to a solution prepared by dissolving 5 parts by weight of oleic acid in 95 parts by weight of toluene, and, while well mixing the resultant mixture, toluene was allowed to evaporate satisfactorily. 21 parts by weight of the resultant goethite particles covered with oleic acid, and 79 parts by weight of polyethylene were well kneaded together in a mortar and obtained a sample. 3.8 parts by weight of the sample obtained and 6.5 parts by weight of water placed in a glass capillary were inserted into a Pyrex glass tube, and the glass tube was evacuated to create a vacuum and sealed. The resultant glass tube was placed in a stainless steel tube, and the stainless steel tube was placed in an electric furnace at 600°C for 20 minutes, and then quickly cooled. After cooling, the gaseous matter in the sealed glass tube was analyzed. Formation of main gaseous matter containing 31 parts by volume of hydrogen, 20 parts by volume of methane, and 7 parts by volume of ethylene has been confirmed.

### (Comparative Example 3)

20 parts by weight of substantially the same goethite particles as those used in Example 2 except that they were not covered with oleic acid, and 80 parts by weight of the same polyethylene as that used in Example 2 were well kneaded together in a mortar in the same manner as in Example 2 and obtained a sample. 3.8 Parts by weight of the sample obtained and 6.5 parts by weight of water placed in a glass capillary were inserted into a Pyrex glass tube, and the glass tube was evacuated to create a vacuum and sealed. The resultant glass tube was placed in a stainless steel tube, and the stainless steel tube was placed in an electric furnace at 600°C for 20 minutes, and then quickly cooled. After cooling, the gaseous matter in the sealed glass tube was analyzed.

Formation of main gaseous matter containing 24 parts by volume of hydrogen, 15 parts by volume of methane, and 6 parts by volume of ethylene has been confirmed.

Next, examples of the third invention will be described.

### (Example 3)

1.1 Parts by weight of a sample which was prepared by well dispersing 30 parts by weight of goethite (α-FeOOH; form: spindle-shaped; specific surface area: 81 m²/g) particles in 70 parts by weight of polyethylene, a sample which was prepared by melt-mixing 3.8 parts by weight of a polyethylene sheet waste material at 120°C, and 6.5 parts by weight of water placed in a glass capillary were inserted into a Pyrex glass tube, and the glass tube was evacuated to create a vacuum and sealed. The resultant glass tube was placed in a stainless steel tube, and the stainless steel tube was placed in an electric furnace at 600°C for 20 minutes, and then quickly cooled. After cooling, the gaseous matter in the sealed glass tube was analyzed. Formation of main gaseous matter containing 21 parts by volume of hydrogen, 12 parts by volume of methane, and 5 parts by volume of ethylene has been confirmed.

### (Comparative Example 4)

Substantially the same procedure as in Example 3 was conducted except that a sample which was prepared by lightly mixing 1.1 parts by weight of the polyethylene sample having dispersed therein the goethite particles and 3.8 parts by weight of a polyethylene sheet waste material with each other in a mortar was used. Formation of main gaseous matter containing 12 parts by volume of hydrogen, 11 parts by volume of methane, and 6 parts by volume of ethylene has been confirmed.

## Claims

1. A method for producing hydrogen, **characterized by** reacting waste, which contains a resin, with water in the presence of hydrous iron oxide particles or/and iron oxide particles.

2. A method for recovering hydrogen, **characterized by** reacting a resin with water in the presence of hydrous iron oxide particles or/and iron oxide particles, and taking hydrogen from the reaction mixture.

3. The method for recovering hydrogen according to claim 2, **characterized in that** said resin is waste containing resin.

4. Use of hydrous iron oxide particles or/and iron oxide particles for producing or recovering hydrogen from a resin waste material.

5. An apparatus for producing or recovering hydrogen from a resin waste material, said apparatus having hydrous iron oxide particles or/and iron oxide particles mounted thereon.

6. A method for producing hydrogen according to claim 1, **characterized by** reacting waste, which contains a resin, with water in the presence of a dispersant and hydrous iron oxide particles or/and iron oxide particles.

7. The method for producing hydrogen according to claim 6, **characterized in that** the surfaces of said hydrous iron oxide particles or/and iron oxide particles are covered with said dispersant.

8. The method for producing hydrogen according to claim 6, **characterized in that** an amount of said dispersant used is 0.1 to 500% by weight, based on the weight of said hydrous iron oxide particles or/and iron oxide particles.

9. A method for producing hydrogen according to claim 1, **characterized in that** a resin composition containing said hydrous iron oxide particles or/and iron oxide particles is mixed with said waste containing resin to provoke a reaction.

10. The method for producing hydrogen according to claim 9, **characterized in that** said resin composition containing said hydrous iron oxide particles or/and iron oxide particles and said waste containing resin are melt-mixed with each other.

11. The method for producing hydrogen according to claim 9, **characterized in that** an amount of said hydrous iron oxide particles or/and iron oxide particles used is 0.01 to 50% by weight, based on the resin weight in said waste containing resin and said resin composition.

12. The method for producing hydrogen according to claim 1 or claim 6, **characterized in that** an amount of said hydrous iron oxide particles or/and iron oxide particles used is 0.01 to 50% by weight, based on the weight of said waste containing resin.

13. The method for producing hydrogen according to any one of claims 1, 6 and 9, **characterized in that** said hydrous iron oxide particles or/and iron oxide particles have a specific surface area or surface area of 5 m²/g or more.

14. The method for producing hydrogen according to any one of claims 1, 6 and 9, **characterized in that** a reaction temperature is 300 to 2,000°C.

15. The method for producing hydrogen according to any one of claims 1, 6 and 9, **characterized in that** a reaction pressure is 0.001 to 1,000 atm.

16. The method for producing hydrogen according to any one of claims 1, 6 and 9, **characterized in that** said hydrous iron oxide comprises one member, or two or more members selected from goethite (α-FeOOH), lepidocrocite (γ-FeOOH), and δ-FeOOH.

17. The method for producing hydrogen according to any one of claims 1, 6 and 9, **characterized in that** said iron oxide comprises one member or a mixture of two or more members selected from hematite (α-Fe₂0₃), magnetite (Fe₃0₄), maghemite (γ-Fe₂0₃), an iron oxide in an oxidation state between that of hematite and that of magnetite, and an iron oxide in an oxidation state between that of maghemite and that of magnetite.

18. A method for recovering hydrogen, **characterized by** reacting a resin with water in the presence of hydrous iron oxide particles or/and iron oxide particles, and taking hydrogen from the reacted mixture.

19. The method for recovering hydrogen according to claim 18, **characterized in that** said resin is waste containing resin.

20. Use of hydrous iron oxide particles or/and iron oxide particles, which have surfaces covered with a dispersant, for producing or recovering hydrogen from a resin waste material.

21. An apparatus for producing or recovering hydrogen from a resin waste material, said apparatus having hydrous iron oxide particles or/and iron oxide particles whose surfaces are covered with a dispersant mounted thereon.

22. An apparatus for producing hydrogen by reacting waste, which contains a resin, with water in the presence of hydrous iron oxide particles or/and iron oxide particles, said apparatus being **characterized in that** a resin composition containing said hydrous iron oxide particles or/and iron oxide particles is mixed with said waste containing resin to provoke a reaction.

23. The apparatus for producing hydrogen according to claim 22, **characterized in that** said resin composition containing said hydrous iron oxide particles or/and iron oxide particles and said waste containing resin are melt-mixed with each other.

24. The apparatus for producing hydrogen according to claim 22, **characterized in that** an amount of said hydrous iron oxide particles or/and iron oxide particles used is 0.01 to 50% by weight, based on the resin weight in said waste containing resin and said resin composition.

25. The apparatus for producing hydrogen according to claim 22, **characterized in that** said hydrous iron oxide particles or/and iron oxide particles have a specific surface area or surface area of 5 m²/g or more.

26. The apparatus for producing hydrogen according to claim 22, **characterized in that** a reaction temperature is 300 to 2,000°C.

27. The apparatus for producing hydrogen according to claim 22, **characterized in that** a reaction pressure is 0.001 to 1,000 atm.

28. The apparatus for producing hydrogen according to claim 22, **characterized in that** said hydrous iron oxide comprises one member, or two or more members selected from goethite (α-FeOOH), lepidocrocite (γ-FeOOH), and δ-FeOOH.

29. The apparatus for producing hydrogen according to claim 22, **characterized in that** said iron oxide comprises one member or a mixture of two or more members selected from hematite (α-Fe₂0₃), magnetite (Fe₃0₄), maghemite (γ-Fe₂0₃), an iron oxide in an oxidation state between that of hematite and that of magnetite, and an iron oxide in an oxidation state between that of maghemite and that of magnetite.

30. A method for producing or recovering hydrogen, **characterized by** reacting a resin with water in the presence of a resin composition containing hydrous iron oxide particles or/and iron oxide particles, and taking hydrogen from the reaction mixture.

31. The method for producing or recovering hydrogen according to claim 30, **characterized in that** said resin is waste containing resin.

32. Use of a resin composition, which contains hydrous iron oxide particles or/and iron oxide particles, for producing or recovering hydrogen from a resin waste material.

33. An apparatus for producing or recovering hydrogen from a resin waste material, said apparatus having a resin composition which contains hydrous iron oxide particles or/and iron oxide particles mounted thereon.
